# EUROPEAN PATENT SPECIFICATION

(11) **EP 3 430 297 B1**
(45) Date of publication and mention of the grant of the patent: **04.12.2019**
(21) Application number: 17710297.7
(22) Date of filing: 14.03.2017
(51) Int. Cl.: F16K 41/12, F16K 1/30

(54) **DISKS ARRANGEMENT BETWEEN A SPINDLE AND A SHUTTER OF A VALVE**
SCHEIBENANORDNUNG ZWISCHEN EINER SPINDEL UND EINER KLAPPE EINES VENTILS
AGENCEMENT DE DISQUES ENTRE UNE TIGE ET UN OBTURATEUR D'UNE SOUPAPE

(30) Priority: 15.03.2016 LU 93000
(43) Date of publication of application: 23.01.2019
(73) Proprietor: Luxembourg Patent Company S.A., 7440 Lintgen (LU)
(72) Inventor: ANTOINE, Michel, 6700 Arlon (BE); SCHMITZ, Jean-Claude, 7340 Heisdorf (LU)
(74) Representative: Lecomte & Partners
(86) International application number: PCT/EP2017/056010
(87) International publication number: WO 2017/157947

(56) References cited:
- EP-A1- 1 798 458
- EP-A2- 0 246 584
- CH-A- 316 241
- GB-A- 2 211 586
- US-A- 1 485 792

## Description

### Technical field

The invention is directed to the field of tap or valves for gas, in particular for industrial compressed gas that is usually stored in containers such as cylinders.

### Background art

Prior art patent document published GB 2 211 586 A discloses a tap or valve for gas cylinders. The tap comprises a body with an inlet portion to be screwed into the neck portion of a gas cylinder. The body comprises a passage for the gas with a first shut-off valve operated by the pressure of a gas and a second shut-off valve, downstream of the first shut-off valve and manually operated. The second shut-off valve comprises a shutter that cooperates with a seat formed in the passage. The shutter is operated by a spindle that is mounted on the body via a thread engagement. A hand-wheel is fixed to the spindle. A flexible membrane extends between the shutter and the spindle and forms a gas tight barrier between the gas passage, in the body and the spindle, and the exterior of the valve. A pressure disk is provided between the membrane and the head of the spindle. The membrane is pre-shaped so as to form a deepening in which the pressure disk is located. The spindle's head is generally curved and convex and contacts a generally flat face of the pressure disk. The opposed face of the pressure disk, resting on the flexible membrane is generally curved and conforms to the deepening in the membrane. The purpose of the pressure disk is to reduce the torque transmission from the spindle to the membrane. To that end, the pressure disk is "housed" in the deepening of the pre-shaped membrane. The pressure disk is thereby prevented from rotating, or at least is less free to rotate, relative to the membrane. The friction caused by the rotation of the spindle is therefore essentially between the generally curved spindle's head and the generally flat pressure disk. This design is interesting in that it avoids frictional wear at the membrane. It requires however that the membrane is pre-shaped with a deepening. This operation can however be difficult to carry out, in particular when the membrane comprises a stack of several disks. It can also weaken the membrane by the plastic deformation.

Prior art patent document published EP 0 246 584 A2 discloses a tap or valve for a gas cylinder. The tap comprises a shutter that is actuated by a rotating spindle. Similarly to the previous teaching, a flexible gas tight membrane is arranged between the spindle and the shutter. Also similarly to the previous teaching, the tap comprises a pressure element interposed between the head of the spindle and the membrane. A washer is arranged between the membrane and the pressure disk for assisting the deformation of the membrane at an annular portion. This increases the fatigue resistance of the membrane. The transmission of torque between the spindle and the membrane is still present despite the use of a pressure disk. The reason is essentially that the contact surface between the spindle's head and the pressure disk is large for providing stability to said disk. The frictional torque transmitted through the contact between the spindle and the pressure disk is substantial. An important operating torque is therefore transmitted to the membrane.

Prior art patent document published LU 86714 discloses a tap or valve for a gas cylinder similar to the one of the previous document.

### Summary of invention

### Technical Problem

The invention has for technical problem to overcome at least one drawback of the above mentioned prior art. More specifically, the invention has for technical problem to provide a tap for compressed gas, with a shutter, an actuating spindle and a flexible membrane between said shutter and spindle, that provides a reduced operating torque and a reduced wear to the membrane while remaining cheap to manufacture.

### Technical solution

The invention is directed to a tap for gas, as defined in claim 1.

By generally flat it is meant that the membrane and the pressure disk are flat in the absence of external force and can be elastically deformed by movement of the spindle and/or the shutter so as to exhibit a general curved profile.

According to a preferred embodiment, the pressure disk is free of attachment at its periphery.

According to a preferred embodiment, the pressure disk is made of a metal plate, preferably a stainless steel plate.

According to a preferred embodiment, the pressure disk has a thickness of less than 0.3mm.

According to a preferred embodiment, the pressure disk has a thickness of less than 0.2mm.

According to a preferred embodiment, the pressure disk has a thickness of less than 0.15mm.

According to the invention, the spindle has a contact surface with the pressure disk, said surface being convex and symmetric around a longitudinal axis of said spindle. Advantageously, the contact surface of the spindle rotates with said spindle. The pressure disk can have a diameter that is equal to or less than the diameter of the contact surface of the spindle.

According to a preferred embodiment, the membrane is a stack of at least three superimposed disks.

According to a preferred embodiment, the membrane is made of at least one metal alloy plate, preferably with a thickness of less than 0.3mm, more preferably with a thickness of less than 0.2mm.

According to a preferred embodiment, the pressure disk has a diameter that is less than the diameter of the membrane.

According to a preferred embodiment, the body comprises a cavity with a shoulder, and a gland engaging with the cavity and with an annular front portion pressing the periphery of the membrane against said shoulder. Advantageously, the gland comprises a bore receiving the contact surface of the spindle and the pressure disk. The bore is circular. The front portion can be flat and the bore can be directly adjacent to said front portion.

According to a preferred embodiment, the pressure disk is in direct contact with the membrane, and is located inside the annular front portion of the gland.

According to a preferred embodiment, the spindle has an outer thread engaging with an inner thread of the gland, the rotation of said spindle causing translation of said spindle and movement of the shutter.

According to a preferred embodiment, the shutter has an operation stroke from a closed position to a fully opened position, the membrane being configured for elastically deforming over said stroke.

According to a preferred embodiment, the stroke is less than 0.5 mm, preferably less than 0.4mm.

### Advantages of the invention

The invention is particularly interesting in that it reduces the frictional torque between the rotating spindle and the non-rotating membrane in a simple and cheap manner. Indeed, the use of circular plate portions for the membrane and the pressure disk is particularly economic and efficient. Damages to the membrane are also avoided. In addition, the tap is rendered more compact in the longitudinal direction since the superimposition of the pressure disk and the membrane is very thin, e.g. less than 1mm.

### Brief description of the drawings

Figure 1 is perspective view of a tap for compressed gas in accordance with the invention.
Figure 2 is a cross-sectional view of the tap of figure 1.
Figure 3 is an exploded view of the tap of figures 1 and 2.

### Description of an embodiment

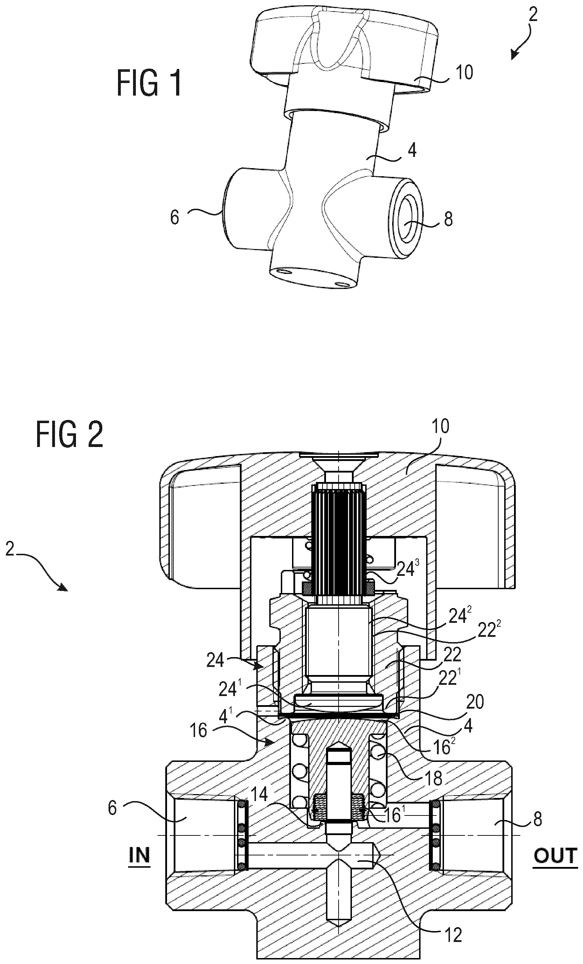

Figures 1 to 3 illustrate a tap for compressed gas, in accordance with the invention.

In figure 1, the tap 2 is illustrated in perspective. It comprises a body 4 with an inlet 6, an outlet 8 and a hand-wheel for operating the tap in order to open or close a passage between the inlet 6 and the outlet 8.

With reference to figure 2, the body 4 of the tap 2 comprises a passage 12 for the gas, said passage 12 fluidly interconnecting the outlet 8 with the inlet 6. The body 4 comprises a seat 14 that is formed around the passage 12. The body 4 houses a shutter 16 that is movable in translation for cooperating the seat 14. More specifically, the shutter 16 can comprises a softer material 16¹ that contacts the seat 14 for closing the passage 12. The shutter 16 is urged away from the seat 14 by a spring 18. The shutter 16 comprises also a head portion 16² that is opposite to the softer material 16¹.

The tap 2 comprises a membrane 20 that extends transversely to the longitudinal axis. The membrane 20 is in contact with the head portion 16² of the shutter 16. The periphery of the membrane 20 rests on a shoulder 4¹ of the cavity of the body housing the shutter 20. A gland 22 is engaged by means of a thread with the cavity. It comprises an annular front portion 22¹ that presses the periphery of the membrane 20 against the annular shaped shoulder 4¹. The membrane 20 forms a gas tight barrier that delimits the passage 10. It forms a barrier between the shutter 16 and a spindle 24. The spindle 24 comprises a front surface 24¹ that contacts the membrane 20. It comprises also an outer thread 24² that mates with an inner thread 22² of the gland 22. Upon rotation of the spindle 24, this latter moves progressively up or down along the longitudinal axis of the tap 2, in addition to the rotational movement. The contact surface 24¹ of the spindle 24 with the membrane 20 is generally curved and convex. The spindle 24 comprises also a portion with fluting in the form of grooves 24³ that extend longitudinally. These grooves engage with corresponding rips of the hand-wheel 10.

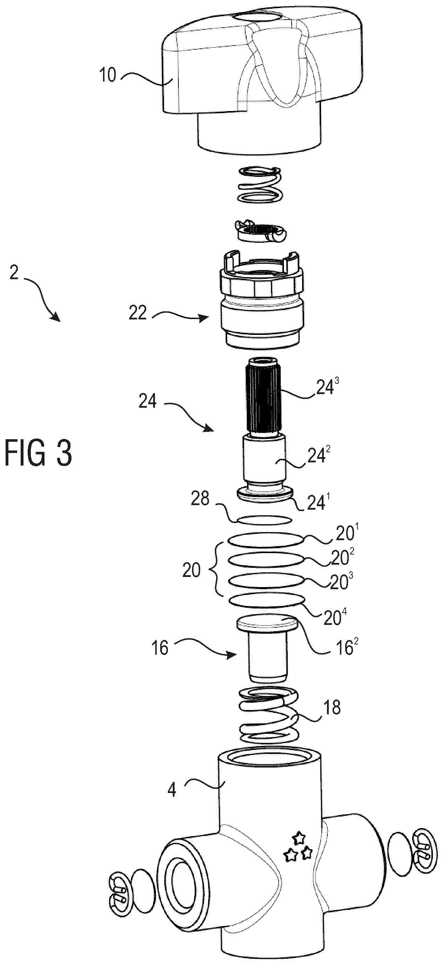

Figure 3 is an exploded view of the tap of figures 1 and 2. As apparent in figure 3, the membrane 20 is a stack of four disks 20¹, 20², 20³ and 20⁴. The disks are preferably identical in shape and material. They are made of metallic material, more specifically of metal plate. The metal can for example stainless steel or a supper alloy, like Hastelloy® C276. They have a constant thickness that is advantageously less than 0.3mm, preferably less than 0.2mm.

Still with reference with figure 3, we can observe that the tap 2 comprises also a pressure disk 28 interposed between the spindle 24 and the membrane 20. This pressure disk also made of a metal plate, i.e. with a constant thickness. The thickness is less than 0.3mm, preferably less than 0.2mm. The diameter of the pressure disk 28 is less than the diameter of the membrane 20. The periphery of the membrane 20 is clamped between the annular shoulder 4¹ and the annular front portion 22¹ of the gland 22 (see figure 2), whereas the pressure disk 28 is freely interposed between the membrane 20 and the spindle 24. During assembly, the series of disks of the membrane 20 are put in place on the shoulder 4¹ and the pressure disk 28 is placed at the centre on the membrane 20 prior to screwing the gland 22 with the spindle 24. When engaging the gland 22, care is taken not to clamp the periphery of the pressure disk. To that end, the diameter of said disk 28 is advantageously less than the inner diameter of the annular front portion 22¹ of the gland 22. This provides some radial play that facilitates assembly.

As apparent in figure 3, the disks 20¹, 20², 20³ and 20⁴ of the membrane 20 are generally flat prior mounting in the tap body. With reference to figure 2, the membrane 20 is generally flat in at least one position of the shutter 16 relative to the seat 14. Depending on the position of the shutter, the membrane can take a slightly curved shape but remains generally flat. The flatness of the membrane can be characterized in that the membrane fails to exhibit local deformations, the membrane being either plane or taking a general curved shape over its entire extent, the curvature being essentially constant along a diameter over the entire extent of the membrane. Similarly, with reference to figure 3, the pressure disk 28 is also generally flat prior assembly.

The arrangement of the pressure disk 28 against the membrane 20 is particularly interesting because it minimizes the transmission of frictional torque during manipulation of the hand-wheel while keeping the construction quite simple and cheap. Indeed, the flat and direct contact between the pressure disk 28 and the proximate disk 20¹ of the membrane 20 generates low frictional forces that allow the pressure disk 28 to rotate relative to the membrane 20. This prevents frictional wear of the membrane 20. This latter remains therefore unaffected by the transmission of torque by the spindle. The convex curved shape of the spindle contact surface 24¹ minimizes the torque transmission to the pressure disk 28, thereby limiting the resistant torque on the spindle and wear on the pressure disk 28. Also the pressure disk can be made of different material since it does not contact the pressurized gas. Also the pressure disk 28, by being made of a plate and therefore by being flexible, follows the deformation of the membrane and keeps a tight contact with the membrane.

The above design provides also a compact construction in the longitudinal direction, essentially in view of the flat construction of the membrane and of the pressure disk.

## Claims

1. Tap (2) for gas, in particular for compressed gas, comprising:
- a body (4) with a gas inlet (6), a gas outlet (8) and a passage (12) fluidly interconnecting said inlet (6) and outlet (8);
- a shutter (16) movable in translation in the body (4) for cooperating with a seat (14) for shutting-off the passage (12);
- a rotating and translating spindle (24) configured for moving the shutter (16) towards the seat (14);
- a disk-shaped membrane (20) between the spindle (24) and the shutter (16), said membrane (20) having its periphery attached to the body (4) in a gas tight manner so as to delimit the passage (12);
- a pressure disk (28) between the spindle (24) and the membrane (20);
wherein the rotating and translating spindle (24) has a surface (24¹) directly contacting the pressure disk (28), said surface (24¹) being convex and symmetric around a longitudinal axis of said spindle (24);
**characterized in that**
the membrane (20) and the pressure disk (28) are generally flat and the pressure disk (28) has a constant thickness and is flexible.

2. Tap (2) according to claim 1, wherein the pressure disk (28) is free of attachment at its periphery.

3. Tap (2) according to one of claims 1 and 2, wherein the pressure disk (28) is made of a metal plate, preferably a stainless steel plate.

4. Tap (2) according to any one of claims 1 to 3, wherein the pressure disk (28) has a thickness of less than 0.3mm.

5. Tap (2) according to any one of claims 1 to 3, wherein the pressure disk (28) has a thickness of less than 0.2mm.

6. Tap (2) according to any one of claims 1 to 3, wherein the pressure disk (28) has a thickness of less than 0.15mm.

7. Tap (2) according to any one of claims 1 to 6, wherein the membrane (20) is a stack of at least three superimposed disks (20¹, 20², 20³, 20⁴).

8. Tap (2) according to any one of claims 1 to 7, wherein the membrane (20) is made of at least one metal alloy plate (20¹, 20², 20³, 20⁴), preferably with a thickness of less than 0.3mm, more preferably with a thickness of less than 0.2mm.

9. Tap (2) according to any one of claims 1 to 8, wherein the pressure disk (28) has a diameter that is less than the diameter of the membrane (20).

10. Tap (2) according to any one of claims 1 to 9, wherein the body (4) comprises a cavity with a shoulder (4¹), and a gland (22) engaging with the cavity and with an annular front portion (22¹) pressing the periphery of the membrane (20) against said shoulder (4¹).

11. Tap (2) according to claim 10, wherein the pressure disk (28) is in direct contact with the membrane (20), and is located inside the annular front portion (22¹) of the gland (22).

12. Tap (2) according to one of claims 10 and 11, wherein the spindle (24) has an outer thread (24²) engaging with an inner thread (22²) of the gland (22), the rotation of said spindle (24) causing translation of said spindle (24) and movement of the shutter (16).

13. Tap (2) according to any one of claims 1 to 12, wherein the shutter (16) has an operation stroke from a closed position to a fully opened position, the membrane (20) being configured for elastically deforming over said stroke.

14. Tap (2) according to claim 13, wherein the stroke is less than 0.5 mm, preferably less than 0.4mm.

## Patentansprüche

1. Hahn (2) für Gas, insbesondere für Druckgas, der Folgendes umfasst:
- ein Gehäuse (4) mit einem Gaseinlass (6), einem Gasauslass (8) und einem Durchgang (12), der den Einlass (6) und den Auslass (8) fluidisch verbindet;
- einen im Gehäuse (4) translatorisch beweglichen Verschluss (16) zum Zusammenwirken mit einem Sitz (14) zum Absperren des Durchgangs (12);
- eine Dreh- und Verschiebespindel (24), die zum Bewegen des Verschlusses (16) in Richtung des Sitzes (14) eingerichtet ist;
- eine scheibenförmige Membran (20) zwischen der Spindel (24) und dem Verschluss (16), deren Umfang gasdicht am Gehäuse (4) angebracht ist, um den Durchgang (12) zu begrenzen;
- eine Druckscheibe (28) zwischen der Spindel (24) und der Membran (20);
wobei die Dreh- und Verschiebespindel (24) eine Oberfläche (24¹) hat, die direkt an der Druckscheibe (28) anliegt, wobei die Oberfläche (24¹) konvex und symmetrisch um eine Längsachse der Spindel (24) ist;
**dadurch gekennzeichnet, dass**
die Membran (20) und die Druckscheibe (28) im Wesentlichen flach sind und die Druckscheibe (28) eine konstante Dicke hat und flexibel ist.

2. Hahn (2) nach Anspruch 1, wobei die Druckscheibe (28) an ihrem Umfang ohne Befestigung ist.

3. Hahn (2) nach einem der Ansprüche 1 und 2, wobei die Druckscheibe (28) aus einer Metallplatte, vorzugsweise einer Edelstahlplatte besteht.

4. Hahn (2) nach einem der Ansprüche 1 bis 3, wobei die Druckscheibe (28) eine Dicke von weniger als 0,3 mm aufweist.

5. Hahn (2) nach einem der Ansprüche 1 bis 3, wobei die Druckscheibe (28) eine Dicke von weniger als 0, 2mm aufweist.

6. Hahn (2) nach einem der Ansprüche 1 bis 3, wobei die Druckscheibe (28) eine Dicke von weniger als 0,15 mm aufweist.

7. Hahn (2) nach einem der Ansprüche 1 bis 6, wobei die Membran (20) ein Stapel von mindestens drei übereinander angeordneten Scheiben (20¹, 20², 20³, 20⁴) ist.

8. Hahn (2) nach einem der Ansprüche 1 bis 7, wobei die Membran (20) aus mindestens einer Metalllegierungsplatte (20¹, 20², 20³, 20⁴) besteht, vorzugsweise mit einer Dicke von weniger als 0,3 mm, und noch bevorzugter mit einer Dicke von weniger als 0,2 mm.

9. Hahn (2) nach einem der Ansprüche 1 bis 8, wobei die Druckscheibe (28) einen Durchmesser aufweist, der kleiner als der Durchmesser der Membran (20) ist.

10. Hahn (2) nach einem der Ansprüche 1 bis 9, wobei das Gehäuse (4) einen Hohlraum mit einer Schulter (4¹) aufweist und eine Stopfbuchse (22), die in den Hohlraum greift und mit einem ringförmigen vorderen Abschnitt (22¹), der den Umfang der Membran (20) gegen die Schulter (4¹) drückt.

11. Hahn (2) nach Anspruch 10, wobei die Druckscheibe (28) in direktem Kontakt mit der Membran (20) steht und sich innerhalb des ringförmigen vorderen Abschnitts (22¹) der Stopfbuchse (22) befindet.

12. Hahn (2) nach einem der Ansprüche 10 und 11, wobei die Spindel (24) ein Außengewinde (24²) aufweist, das mit einem Innengewinde (22²) der Stopfbuchse (22) zusammenwirkt, wobei die Drehung der Spindel (24) eine Verschiebung der Spindel (24) und eine Bewegung des Verschlusses (16) bewirkt.

13. Hahn (2) nach einem der Ansprüche 1 bis 12, wobei der Verschluss (16) einen Betätigungshub von einer geschlossenen Position zu einer vollständig geöffneten Position aufweist, wobei die Membran (20) zum elastischen Verformen über den Hub konfiguriert ist.

14. Hahn (2) nach Anspruch 13, wobei der Hub weniger als 0,5 mm, vorzugsweise weniger als 0,4 mm beträgt.

## Revendications

1. Robinet (2) pour du gaz, en particulier pour du gaz mis sous pression, comprenant :
- un corps (4) comprenant une entrée (6) pour le gaz, une sortie (8) pour le gaz et un passage (12) qui relie l'une à l'autre par fluide ladite entrée (6) et ladite sortie (8) ;
- un obturateur (16) mobile en translation dans le corps (4), destiné à coopérer avec un siège (14) à des fins d'obturation du passage (12) ;
- une broche (24) apte à effectuer des rotations et un mouvement de translation, configurée pour déplacer l'obturateur (16) en direction du siège (14) ;
- une membrane (20) possédant une configuration en forme de disque entre la broche (24) et l'obturateur (16), la périphérie de ladite membrane (20) étant fixée au corps (4) d'une manière étanche aux gaz de façon à délimiter le passage (12) ;
- un disque de pression (28) entre la broche (24) et la membrane (20) ;
dans lequel la broche (24) apte à effectuer des rotations et un mouvement de translation possède une surface (24¹) qui entre directement en contact avec le disque de pression (28), ladite surface (24¹) étant convexe et symétrique autour d'un axe longitudinal de ladite broche (24) ;
**caractérisé en ce que** la membrane (20) et le disque de pression (28) sont d'une manière générale de forme plate et le disque de pression (28) possède une épaisseur constante et est flexible.

2. Robinet (2) selon la revendication 1, dans lequel le disque de pression (28) est exempt de fixation à sa périphérie.

3. Robinet (2) selon l'une quelconque des revendications 1 et 2, dans lequel le disque de pression (28) est réalisé sous la forme d'une plaque métallique, de préférence sous la forme d'une plaque en acier inoxydable.

4. Robinet (2) selon l'une quelconque des revendications 1 à 3, dans lequel le disque de pression (28) possède une épaisseur inférieure à 0,3 mm.

5. Robinet (2) selon l'une quelconque des revendications 1 à 3, dans lequel le disque de pression (28) possède une épaisseur inférieure à 0,2 mm.

6. Robinet (2) selon l'une quelconque des revendications 1 à 3, dans lequel le disque de pression (28) possède une épaisseur inférieure à 0,15 mm.

7. Robinet (2) selon l'une quelconque des revendications 1 à 6, dans lequel la membrane (20) représente une pile d'au moins trois disques superposés (20¹, 20², 20³, 20⁴).

8. Robinet (2) selon l'une quelconque des revendications 1 à 7, dans lequel la membrane (20) est réalisée sous la forme d'au moins une plaque d'alliage métallique (20¹, 20², 20³, 20⁴), de préférence avec une épaisseur inférieure à 0,3 mm, de manière plus préférée avec une épaisseur inférieure à 0,2 mm.

9. Robinet (2) selon l'une quelconque des revendications 1 à 8, dans lequel le disque de pression (28) possède un diamètre qui est inférieur au diamètre de la membrane (20).

10. Robinet (2) selon l'une quelconque des revendications 1 à 9, dans lequel le corps (4) comprend une cavité munie d'un épaulement (4¹), et une garniture (22) qui entre en contact avec la cavité et avec une portion avant annulaire (22¹) qui comprime la périphérie de la membrane (20) contre ledit épaulement (4¹).

11. Robinet (2) selon la revendication 10, dans lequel le disque de pression (28) est mis en contact direct avec la membrane (20) et est disposé à l'intérieur de la portion avant annulaire (22¹) de la garniture (22).

12. Robinet (2) selon l'une quelconque des revendications 10 et 11, dans lequel la broche (24) possède un filet de vis externe (24²) qui vient s'engrener avec un filet de vis interne (22²) de la garniture (22), la rotation de ladite broche (24) provoquant le mouvement de translation de ladite broche (24) ainsi que le mouvement de l'obturateur (16).

13. Robinet (2) selon l'une quelconque des revendications 1 à 12, dans lequel l'obturateur (16) possède une course de travail à partir d'une position fermée jusqu'à une position complètement ouverte, la membrane (20) étant configurée pour subir une déformation élastique au cours de ladite course.

14. Robinet (2) selon la revendication 13, dans lequel la course est inférieure à 0,5 mm, de préférence inférieure à 0,4 mm.
